# EUROPEAN PATENT SPECIFICATION

(11) **EP 1 242 253 B1**
(45) Date of publication and mention of the grant of the patent: **18.05.2005**
(21) Application number: 99966373.5
(22) Date of filing: 16.12.1999
(51) Int. Cl.: B60C 15/024, B60C 17/00

(54) **TIRE WITH CAVITIES IN BEAD REGION**
LUFTREIFEN MIT HOHLRAUM IM WULST
PNEU COMPRENANT DES CAVITES DANS LA REGION DU BOURRELET

(43) Date of publication of application: 25.09.2002
(73) Proprietor: THE GOODYEAR TIRE & RUBBER COMPANY, Akron, Ohio 44316-0001 (US)
(72) Inventor: FONTAINE, Jean, Francois, Leon, L-9142 Burden (LU); KOEUNE, Jean-Marie, Jules, Joseph, B-B-6600 Bastogne (BE)
(74) Representative: Kutsch, Bernd
(86) International application number: PCT/US1999/030094
(87) International publication number: WO 2001/043993

(56) References cited:
- EP-A- 0 774 368
- DE-C- 893 164
- PATENT ABSTRACTS OF JAPAN vol. 012, no. 190 (M-704), 3 June 1988 (1988-06-03) & JP 62 299411 A (BRIDGESTONE CORP), 26 December 1987 (1987-12-26)
- PATENT ABSTRACTS OF JAPAN vol. 017, no. 623 (M-1511), 17 November 1993 (1993-11-17) & JP 05 193312 A (BRIDGESTONE CORP), 3 August 1993 (1993-08-03)

## Description

### TECHNICAL FIELD

The present invention relates to a pneumatic tire, specifically to improvements to the bead region of tires designed for runflat operations

### BACKGROUND OF THE INVENTION

An important design consideration in the development of a run-flat tire is insuring that the uninflated tire remains seated on the rim. Solutions have been developed employing bead restraining devices as well as special rims to accomplish this requirement.

The design of the bead region for extended mobility technology (EMT) tires requires the balance of two opposing criteria. The design of the bead region must provide the means for the bead to remain seated on the rim during uninflated operation and the design should be compatible with conventional wheel rims. The design should also allow the tire to be installed on a conventional wheel without special equipment or procedures and removed from a conventional wheel without damage to the tire. The prior art shows a variety of approaches, however, none provide a completely satisfactory solution to the problem or an optimum balance of operating characteristics when uninflated and compatibility with conventional wheels, tires, and mounting procedures.

The compressive force of the air in typical pneumatic tire is confined by the carcass plies in tension. The tensile force in the carcass plies is transmitted to the bead cores, placing the bead cores in tension. The bead core holds the bead seat radially inward against the rim of the wheel and in the case of tubeless tires maintains an air tight seal between the bead and rim bead seat of the wheel. The compressive force of the air in the tire also exerts an axial outward force on the bead region of the tire pressing the axially outward facing surfaces of bead seat against the rim flange. The relatively thin and flexible sidewalls of a normally inflated conventional tire do not transmit significant compressive forces, bending moments or axially inward forces to the bead region except possibly under conditions of severe cornering or breaking.

In comparison, EMT tires often rely on a thickened and reinforced sidewall construction to provide uninflated operation. These thickened and reinforced sidewalls are capable of transmitting compressive and bending stresses to the bead regions of the tire particularly during under-inflated or uninflated operation. These compressive and bending stresses conspire to unseat the bead from the rim particularly when combined with the additional lateral forces encountered in cornering. The compressive loading of the reinforced sidewalls carries an axial inward component tending to unseat the bead. The bending stresses tend to lift the radially and axially innermost edge of the bead or bead toe facilitating the slippage of the bead over any humps or protrusions that may be provided axially inward of the bead seat.

The prior art shows a considerable variety of approaches to the design a bead-wheel interface capable of resisting the axially inward forces that may be encountered during uninflated operation. Many of these approaches require modifications to the wheel rim as well as the bead region of the tire to provide and interlocking geometry where circumferential grooves or humps on the bead are matched by complementary grooves or humps on the flange and bead seat regions of the wheel. However the use of non-standards wheels and tires has not received wide application.

A more simple solution is to increase the size and strength of the bead core to improve the runflat operation. However, as the strength of the bead core is increased, mounting the tire on a wheel becomes more difficult and may require special equipment.

Another approach is to redesign the wheel and tire bead with a non-conventional geometry. For example, U.S. Patent 5,145,536 ('536) discloses a bead profile with an elastomeric projection or toe extending radially and axially inward from the bead core and a wheel rim provided with a complementary groove. The wheel rim of the '536 patent is designed with an annular groove and hump that accommodate the toe and groove respectively of the tire bead.

U.S. Patent 4,015,652 discloses a radial tire where at least one bead portion is adhered to the rim at one of the seats with a cement having sufficient bonding strength to retain the bead portion on the rim during operation of the tire in the deflated condition.

Patent Abstracts of Japan, Publication No. JP 62 299411 (26-12-87) discloses a tire, according to the preamble of claim 1, having a plurality of projections (33) at a rim flange contacting section of a tire bead section. Recesses (34) are formed between the projections The axially outward surface of the bead section is provided with the projections/recesses.

Patent Abstracts of Japan, Publication No. JP 05 193312 (03-08-93) discloses a tire which appears to have a recessed groove 38 formed on a bead base part 36. The groove 38 appears to be a torus (annular) groove extending circumferentially around the tire on the radially innermost surface of the bead region.

Despite the variety of ingenious approaches to improving the interface between the bead and the rim to provide more robust runflat operation, none of the existing designs have provided an entirely satisfactory solution.

### SUMMARY OF THE INVENTION

The present invention provides an improvement to the interface between the bead region of the tire and the wheel rim to maintain bead seating at very low inflation pressures and to resist the tendency the tire bead to rotate and roll off the bead seat of the tire rim when operated in an under-inflated or uninflated condition.

It provides a tire according to claim 1.

In one embodiment the present invention the cavities are circular in their area of contact with the bead seat. The void spaces bounded by the cavities and the rim of the wheel are lenticular in shape having a partial spherical shape defined by the surface of the bead and having a cylindrical or conical shape defined by the bead seat. The cavities are arranged with uniform spacing around the circumference of the bead regions and are aligned in a circumferential pattern with a uniform minimum distance from the edges of the cavities to the axially inward edge of the bead toe.

During the process of installing the tire upon the wheel, the cavities are flattened against the bead seat and the air contained by void spaces defined by the bead cavities and the bead seat is substantially expelled from the void space. The cavities are surrounded by elastomeric material that provides an air-tight seal preventing air from leaking back into the void spaces defined by the cavities and the rim once the tire has been installed in the wheel. The cavities are held in a flattened condition against the bead seat by the bead core which generate compression on the rim when the tire is installed on a wheel rim and operated in a normally inflated condition on a vehicle.

Once the cavities have been flattened by installation or operation of the tire, the bead will resist separation from the wheel rim bead seat. Due to adherence force generated by the air vacuum, cavities in the vicinity of the bead toe, once flattened by installation or operation, will resist rotation of the bead region that would tend to lift or separate the bead toe from the rim bead seat.

In another embodiment, a pneumatic tire having a tread, a belt structure and a carcass structure comprising a pair of sidewalls , a pair of bead regions, one or more plies anchored in each bead region is provided with a torus cavity in a section of a surface of one or both bead regions that are in contact with a wheel rim during normal inflated operation. The torus cavity is aligned in a circumferential pattern with a uniform minimum distance from the edges of the torus cavity to the axially inward edge of the bead toe, having a minimum distance from the edges of the torus cavity to the axially inward edge of the bead toe.

The process of installing the tire upon the wheel causes the torus cavity to flatten against the bead seat and the air contained by void spaces defined by the torus cavity and the bead seat to be substantially expelled from the void space creating adherence force via vacuum. The surrounding elastomeric material of the torus cavity provides an air-tight seal preventing air from leaking back into the void spaces defined by the torus cavity and the rim once the tire has been installed in the wheel. The torus cavity may also be flattened or held in a flattened condition against the bead seat by the bead core when the tire is installed on a wheel rim and operated in a normally inflated condition on a vehicle. The torus cavity may also be flattened or held in a flattened condition against the wheel rim by the bead core when the tire is installed on a wheel rim and operated in an inflated or uninflated condition on a vehicle traveling in a straight line and at a constant speed.

Once the torus cavity has been flattened by installation or operation of the tire, the bead will resist separation from the wheel rim bead seat and resist rotation of the bead region that would tend to lift or separate the bead toe from the rim bead seat.

### BRIEF DESCRIPTION OF THE DRAWINGS

Reference will be made in detail to preferred embodiments of the invention, examples of which are illustrated in the accompanying drawings. The drawings are intended to be illustrative, not limiting. Certain elements in selected ones of the drawings may be illustrated not-to-scale, for illustrative clarity.

Often, similar elements throughout the drawings may be referred to by similar references numerals. For example, the element 199 in a figure (or embodiment) may be similar in many respects to the element 299 in an other figure (or embodiment). Such a relationship, if any, between similar elements in different figures or embodiments will become apparent throughout the specification, including, if applicable, in the claims and abstract. In some cases, similar elements may be referred to with similar numbers in a single drawing. For example, a plurality of elements 199 may be referred to as 199a, 199b, 199c, etc.

The cross-sectional views presented herein may be in the form of "slices", or "near-sighted" cross-sectional views, omitting certain background lines which would otherwise be visible in a true cross-sectional view, for illustrative clarity.

The structure, operation, and advantages of the present preferred embodiment of the invention will become further apparent upon consideration of the following description taken in conjunction with the accompanying drawings, wherein:
**FIGURE 1** is a cross-sectional view of a tire incorporating a first embodiment of the present invention;
**FIGURE 1a** is a detailed cross-sectional view of the bead region of the tire of **FIGURE 1** showing a first embodiment of the present invention as a series of cavities in the seat of the bead;
**FIGURE 1b** is a detailed view of the radially innermost surface of the bead region of **FIGURE 1a** showing a series of cavities according to a first embodiment of the present invention;
**FIGURE 2** is a cross-sectional view of a tire incorporating a second embodiment of the present invention;
**FIGURE 2a** is a detailed cross-sectional view of the second embodiment of the present invention wherein the bead region includes a circumferential, torus cavity; and
**FIGURE 2b** is a detailed view of the radially innermost surface of the bead region of **FIGURE 2a** showing a circumferential torus cavity according to a second embodiment of the present invention.

### DEFINITIONS

"Axial" and "Axially" means the lines or directions that are parallel to the axis of rotation of the tire.

"Axially Inward means in an axial direction toward the equatorial plane.

"Axially Outward" means in an axial direction away from the equatorial plane.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Bead Seat" refers to the area of the wheel comprising a portion of the wheel rim and the flange that are normally in contact with the rim of the tire during normal inflated operation.

"Bead Toe" refers to a projection of the bead region radially and axially inward of the bead core.

"Bead Heel" refers to that portion of the bead that is axially outward and radially inward from the bead core

"Belt Structure" or "Reinforcement Belts or "Belt Package means at least two annular layers or plies of parallel cords, woven or unwoven, underlying the tread, unanchored to the bead, and having both left and right cord angles in the range from 18 degrees to 30 degrees relative to the equatorial plane of the tire.

"Carcass" means the tire structure apart from the belt structure, tread, undertread over the plies, but including the beads.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Crown" or "Tire Crown" means the tread, tread shoulders and the immediately adjacent portions of the sidewalls.

"Equatorial Plane" means the plane perpendicular to the tire's axis of rotation and passing through the center of its tread; or the plane containing the circumferential centerline of the tread.

"Lateral" means a direction parallel to the axial direction.

"Ply" means a cord-reinforced layer of rubber coated radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65 degrees and 90 degrees with respect to the equatorial plane of the tire.

"Radial Ply Tire" means a belted or circumferentially-restricted pneumatic tire in which at least one ply has cords which extend from bead to bead are laid at cord angles between 65 degrees and 90 degrees with respect to the equatorial plane of the tire.

"Rim-Bead Interface" refers to the area of contact between the rim of the wheel and the bead of the tire during normal inflated operation.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Shoulder" means the upper portion of sidewall just below the tread edge.

"Sidewall" means that portion of a tire between the tread and the bead.

"Tangential" and "Tangentially" refer to segments of circular curves that intersect at a point through which can be drawn a single line that is mutually tangential to both circular segments.

"Tread Cap" refers to the tread and the underlying material into which the tread pattern is molded.

"Tread width" means the arc length of the tread surface in the plane includes the axis of rotation of the tire.

"Wheel Flange" refers to a radially outward projection of the wheel rim at one or both of the axially outermost edges of the wheel.

### DETAILED DESCRIPTION OF THE PREFERRED EMBODIMENT

### Prior Art Embodiment

The present invention provides a general means to improve the interface between a tire bead and a wheel rim particularly for extended mobility technology (EMT) tires during under-inflated or uninflated operation. The tire bead of a conventional tire during normal inflated operation is held in place by tension in the bead core and pressure in the tire. However, in the design of EMT tires, conventional bead designs have been found inadequate to fully resist the forces on the bead region that occur when the tire is operated in an under-inflated or uninflated condition. A variety of designs have been developed that depend on modifications to the wheel rim and the tire bead to provide enhanced runflat capabilities. However, most of these designs are not compatible with either conventional tires or conventional rims and have not met with widespread acceptance. The present invention provides an improvement to the bead design that is compatible with conventional wheel rim designs.

The surfaces of conventional and EMT beads are normally smooth over the normal area of contact with the rim. U.S. Patent 5,769,981 ('981) discloses a radial tire having bead regions with between two and ten circumferentially extending ribs projecting outward of the bead region outer surface to improve uniformity when mounted on a wheel rim. The present invention provides a series of cavities or circumferential indentation groove in the bead that would increase the adherence of the bead to the rim bead seat. Also by increasing the adherence of the bead to the rim in the vicinity of the bead toe the resistance of the bead region to bending forces can be increased.

### Preferred Embodiment of the Present Invention

The present invention relates to improving the retention of the bead region of a tire on the bead seat of a conventional wheel rim and is particularly applicable to improving the runflat performance of EMT tires. One aspect of the present invention relates to providing a series of discrete cavities on the surface of the bead region of a tire. The invention anticipates many varieties of patterns, sizes and locations of the cavities on the surface of the bead region that would meet the essential objectives of the present invention with essentially equivalent means that fall within the scope of this invention.

### Detailed Description of the First Embodiment

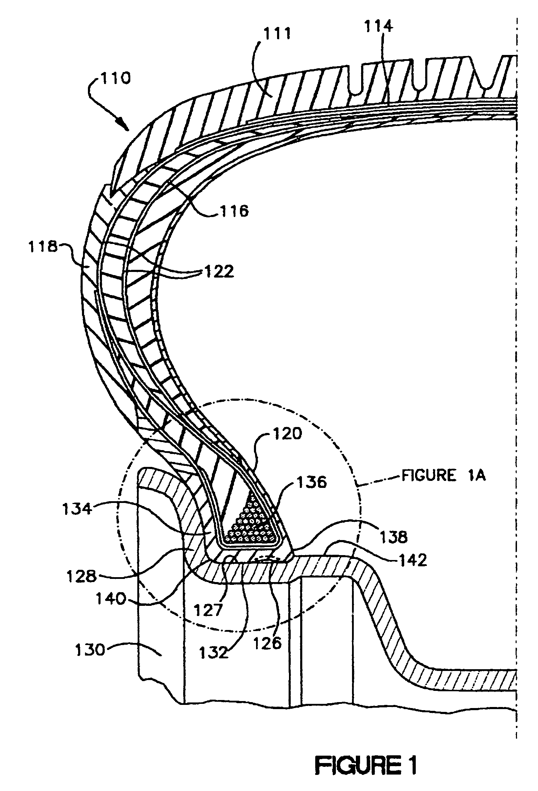

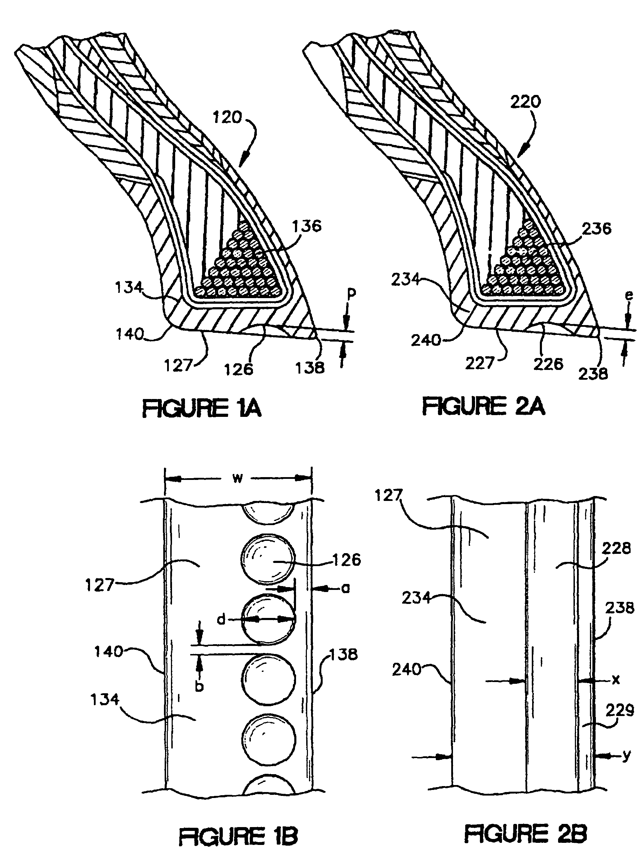

Referring to **FIGURE 1,** there is illustrated a cross-sectional view of a runflat tire **110** incorporating a series of discrete cavities **126** on the surface of the bead region **120** of the tire in accordance with the first embodiment of the invention. The tire **110** has a tread **112,** a belt structure **114,** and a carcass structure **116,** comprising a pair of sidewalls **118,** a pair of bead regions **120,** and one or more reinforcing carcass plies **122** anchored in each bead region **120.** A series of cavities **126** are located in the surface **127** of the bead region **120** which contacts the wheel rim **128.**

When the tire **110** is installed on a wheel **130,** the cavities **126** are flattened against the rim bead seat **132** causing at least a 95 percent reduction in the volume of the cavities and causing the expulsion of about 90 percent of the air contained by the cavities. In addition, the initial size and shape of the cavities **126,** the elasticity of the surrounding elastomeric material **134** in the bead region **120** and the nominal tension in the bead cores **136** may be designed to continue to flatten the cavities **126** in surface **127** against the bead seat **132.** These design characteristics are selected so that the cavities **126** are maintained at a reduced volume which in turn causes any air or other gases to be substantially expelled from the cavities in the course of normal tire operation. Referring to **FIGURE 1,** the volume of the cavity **126** prior to installation on the wheel **130,** is indicated by a dashed line.

Furthermore, when the tire **110** of the present invention incorporates reinforced sidewalls **118** to provide extended runflat capability, the reinforced sidewall structure may be designed to flatten each of the cavities **126** against the bead seat **132** at least once during each rotation of the tire **110.** This flattening assists in reducing the volume of the cavities **126** to substantially expel any gasses that may be contained by the cavities.

Referring to **FIGUREs 1A** and **1B** showing a detailed cross-section of the bead region **120** and a partial view of the radially innermost surface **127** of the bead region, respectively, the cavities **126** are evenly spaced about the radially innermost surface **127** of each bead region **120** in the proximity of the bead toe **138.** In an exemplary tire, which is shown and described for illustration purposes only, the cavities **126,** in their area of contact with the bead seat **132,** have a diameter "d" of typically between 30% and 50% of the overall axial width "w" of the bead region **120.** "w" measured from heel **140** to toe **138** is typically from 20 mm to 28 mm as measured in an axial direction. The axially located innermost point of the cavities **126** are located a distance "a" of typically between 1mm to 4mm from the radially innermost edge or toe **138** of the bead region **120.** The minimum distance "b" between cavities **126** is close to the distance "a" value. The maximum initial depth "p" of the cavities **126,** measured in a radial direction relative to the cylindrical plane of the nominal bead seat **132,** is typically from 1mm to 3mm. In shape, the radially outermost surfaces of the cavities **126** conforms to a portion of a sphere. Thus formed with a radially outward spherical shape, the cavities 126 may be considered as having a lenticular shapes with one side having a spherical shape and the other side having a more or less cylindrical shape conforming to the shape of the rim bead seat **132.** However, the cavities **126** of the present invention may have any shape providing that the quantity of air or other gasses contained by the cavity is substantially decreased by the installation or operation of the tire upon a wheel and that the surrounding elastomeric material **134** prevents air or other gasses from leaking back into the cavities **126.**

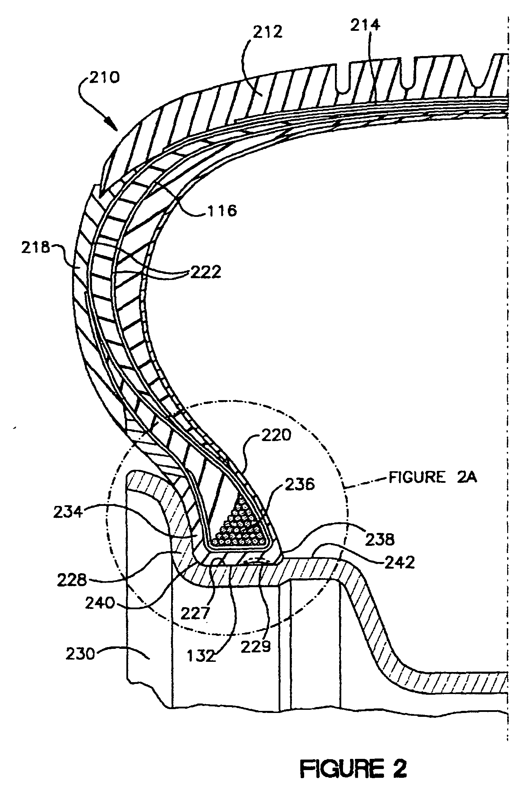

Referring to **FIGURE 2,** a second embodiment of the present invention is illustrated. The tire **210** has a tread **212,** a belt structure **214,** and a carcass structure **216,** comprising a pair of sidewalls **218,** a pair of bead regions **220,** one or more reinforcing carcass plies **222** anchored in each bead region.

As shown by **FIGURE 2A** and **2B,** which provide a detailed cross-section view of the bead region **220** and a partial view of the radially innermost surface **227** of the bead region **220,** respectively, the radially innermost surface **227** of the bead region is provided with a circumferential torus cavity **226** located adjacent to bead toe **238.** As shown in **FIGURE 2A** the torus cavity **226** has a curved radially outermost surface that appears similar to that of the cavities **126** of first embodiment when seen in cross section. However, **FIGURE 2B,** providing a plan view of the bead surface **227,** shows that the torus cavity **226** is continuous in the second embodiment and extends circumferentially over the radially innermost surface of the bead region **220.**

When the tire **210** is installed on a wheel **230,** the torus cavity **226** is flattened against the rim bead seat **232** causing a substantial reduction in the volume of the torus cavity **226** and causing most of the air contained by the torus cavity **226** to be expelled. In addition, the initial size and shape of the torus cavity **226,** the elasticity of the surrounding elastomeric material **234** and the nominal tension in the bead cores **236a,236b** may be designed to continue to flatten the torus **128** against the bead seat **232** causing the torus cavity **226** to be maintained at a reduced volume and causing any air or other gases to be substantially expelled from the cavities in the course of normal operation.

Referring to **FIGURE 2B,** the torus cavity **226** provides a uniform cavity extending over the radially innermost surface of each bead region **220** in the proximity of the bead toe **238.** In the exemplary tire **210,** which is shown and described for illustration purposes only, the torus cavity **226** has a width "x" of typically between 30% and 50% of the overall axial width "y" of the bead region **220.** The overall width "y" of the bead region **220,** measured from heel **240** to toe **238** is from 20 mm to 28 mm as measured in an axial direction. Preferably, the axially innermost edges **226** of the torus cavity **226** is located from 1 to 6 mm from the radially innermost edge or toe **238** of the bead region **220.** The maximum initial depth "e" of the torus cavity **226,** measured in a radial direction relative to the cylindrical plane of the nominal bead seat **232,** is typically from 1mm to 3mm. In shape, the radially outermost surfaces of the torus cavity **226** conforms to a portion of a torus having a radius typically from 6mm to 12mm in the axial direction and radius more or less equal to the radius of the bead in the radial direction. However, the torus cavity **226** may have any cross-sectional shape providing that the quantity of air or other gasses contained by the torus cavity **226** is substantially decreased by the installation or operation of the tire upon a wheel **230** and that the surrounding elastomeric material **234** prevents air or other gasses from leaking back into the torus cavity **226.**

### Dynamic Operation of the Inventive Concept

The dynamic operation of the inventive concept is described relative to the details of the first embodiment. However the basic principles of operation and the essential results are equivalent for the two embodiments described above as well as for a range of applications that could vary considerably in detail but not the spirit of the present invention. One skilled in the art will find no difficulty in applying the following discussion to both embodiments as well as to a variety of easily conceived alternatives.

Once the cavities **126** of the first embodiment have been flattened against the bead seat **132** reducing their volume and expelling a substantial portion of any gasses that may have been contained by the cavities, the surrounding elastomeric material **134** seals the edges of the cavities to the bead seat **132** preventing air or other gasses from leaking back into the cavities **126.** Any attempt to separate a bead surface **127** provided with such cavities **126** will require an expansion in the volume of the cavities. However, since the quantity of the air or other gasses contained by the cavities **126** has been substantially reduced, small absolute increase in the volume of the cavities **126** will require a relatively large percentage increase in the volume of the cavities **126** with a large resulting decrease in the pressure of the air or other gasses contained within each the cavities **126.** As a result, the pressure within the cavities **126** will be substantially reduced relative to the pressure of the air surrounding the bead region **126,** and this net difference in pressure will resist the further separation of the bead region from the rim.

With the loss of air pressure, the sidewalls **118** bulge axially outward so that the compressive force is applied to the bead region **120** with an axially inward component. In addition, the bulging of the sidewalls **118** also introduces a bending stress which tends to rotate the bead regions **120** lifting the axially and radially innermost edge of the bead region, also known as the bead toe **138** from the bead seat **132.** The rotation of the bead region **120** reduces the area of contact between the bead region **120** and the rim bead seat **132** of the wheel **130.** The rotation also lifts the toe **138** of the bead from the rim bead seat **132** and facilitates the axially inward movement of tire **130** over any axially inward humps **142** in the rim.

The present invention provides a means to prevent the toe **138,238** from being separated from the rim bead seat **132.** By placing a series of cavities **126** or a circumferential torus cavity **226** in the proximity of the toe **138,238** of a bead region **120,220,** the separation of the toe **138,238** from the bead seat **132,232** is resisted by the net difference in pressure between the small volume of air and other gasses trapped in the cavities **138,238** and the surrounding air pressure. Preventing the toe **138,238** from being rotated out of position will cause the heel **140,240** of the bead region **120,220** to bear more firmly against the bead seat, increasing the frictional resistance of the bead to axial movement. In addition, if the wheel rim is provided with a hump **142** placed axially inward of the bead seat **132,** the bead toe **138,238** will be held in position against the hump **142** where it can also provide resistance to axially inward movement. If the bead toe **138,238** were not held in position the bending moment transmitted to the bead region **120,220** could rotate the bead region and lift the bead toe **138,238** over the hump **142** in a process leading to the unseating of the bead region from the rim. However, while the use of a wheel **130,** incorporating a hump **142** located axially inward of the bead seat **132** provides certain advantages, a hump **142** is not essential to the operation or benefits provided by the present invention.

## Claims

1. A pneumatic tire (110) having a tread (112), a belt structure (114) and a carcass structure (116) comprising a pair of sidewalls (118), a pair of bead regions (120), and one or more plies (122) anchored in the bead regions, the tire (110) being **characterized by** a plurality of cavities (126) extending along a radially innermost bead surface (127) of each of the pair of bead regions (120) in contact with a wheel rim (128) during normal inflated operation.

2. The tire of claim 1 **characterized in that** the cavities (126) are circular in their area of contact with a bead seat (132) of the wheel rim (128).

3. The tire of claim 1 where the cavities (126) form void spaces bounded by the bead region (120) and the wheel rim (128) are lenticular in shape defined by the bead surface (127) and the bead seat (132).

4. The tire of claim 1 where the cavities (126) are evenly spaced on the bead surface (127) around the circumference of the bead regions (220).

5. The tire of claim 1 **characterized in that** the cavities (126) are flattened against a bead seat (132) of the wheel rim (128) causing the air contained within void spaces defined by the cavities (126) and the bead seat (132) to be substantially expelled from the void spaces when the tire is mounted on the wheel.

6. The tire of claim 5 **characterized in that** the cavities (126) are surrounded by elastomeric material that provides an air-tight seal to prevent air from leaking back into the void spaces defined by the cavities (126) and the wheel rim (128) once the tire has been mounted on the wheel.

7. The tire of claim 1 **characterized in that** the cavities (126) are flattened against a bead seat (132) of the wheel rim (128) by bead cores (136) within bead regions (120) when the tire is mounted on a wheel rim (130) and operated in a normally inflated condition.

8. The tire of claim 1 **characterized in that** the cavities (126) are flattened against a bead seat (132) of the wheel rim (128) by bead cores (136) within bead regions (120) when the tire is mounted on a wheel rim (130) and operated in an underinflated or uninflated condition.

## Patentansprüche

1. Luftreifen (110) mit einer Lauffläche (112), einem Gürtelaufbau (114) und einem Karkassaufbau (116), der ein Paar Seitenwände (118), ein Paar Wulstbereiche (120) und eine oder mehrere Lagen (122) umfasst, die in den Wulstbereichen verankert sind, wobei der Reifen (110) durch eine Vielzahl von Hohlräumen (126) **gekennzeichnet** ist, die sich im Betrieb im normal aufgepumpten Zustand entlang einer radial innersten Wulstoberfläche (127) eines jeden von dem Paar Wulstbereichen (120) in Kontakt mit einer Radfelge (128) erstrecken.

2. Reifen nach Anspruch 1, **dadurch gekennzeichnet, dass** die Hohlräume (126) in ihrer Kontaktfläche mit einem Wulstsitz (132) der Radfelge (128) kreisförmig sind.

3. Reifen nach Anspruch 1, wobei die Hohlräume (126) Leerräume bilden, die durch den Wulstbereich (120) und die Radfelge (128) begrenzt sind und die von einer Linsenform sind, die durch die Wulstoberfläche (127) und den Wulstsitz (132) definiert ist.

4. Reifen nach Anspruch 1, wobei die Hohlräume (126) in gleichen Abständen an der Wulstoberfläche (127) um den Umfang der Wulstbereiche (220) herum angeordnet sind.

5. Reifen nach Anspruch 1, **dadurch gekennzeichnet, dass** die Hohlräume (126) gegen einen Wulstsitz (132) der Radfelge (128) abgeflacht sind, wodurch bewirkt wird, dass die Luft, die in den Leerräumen enthalten ist, die durch die Hohlräume (126) und den Wulstsitz (132) definiert sind, aus den Leerräumen im Wesentlichen ausgestoßen ist, wenn der Reifen an das Rad montiert ist.

6. Reifen nach Anspruch 5, **dadurch gekennzeichnet, dass** die Hohlräume (126) von elastomerem Material umgeben sind, das eine luftdichte Abdichtung bereitstellt, um zu verhindern, dass Luft zurück in die Leerräume gelangt, die durch die Hohlräume (126) und die Radfelge (128) definiert sind, sobald der Reifen an das Rad montiert worden ist.

7. Reifen nach Anspruch 1, **dadurch gekennzeichnet, dass** die Hohlräume (126) gegen einen Wulstsitz (132) der Radfelge (128) durch Wulstkerne (136) in Wulstbereichen (120) abgeflacht sind, wenn der Reifen auf eine Radfelge (130) aufgezogen ist und im normal aufgepumpten Zustand betrieben wird.

8. Reifen nach Anspruch 1, **dadurch gekennzeichnet, dass** die Hohlräume (126) gegen einen Wulstsitz (132) der Radfelge (128) durch Wulstkerne (136) in Wulstbereichen (120) abgeflacht sind, wenn der Reifen auf eine Radfelge (130) aufgezogen ist und in einem zu gering aufgepumpten oder nicht aufgepumpten Zustand betrieben wird.

## Revendications

1. Bandage pneumatique (110) possédant une bande de roulement (112), une structure de ceintures (114) et une structure de carcasse (116) comprenant une paire de flancs (118), une paire de talons (120) et une ou plusieurs nappes (122) ancrées dans les régions de talons, le bandage pneumatique (110) étant **caractérisé par** plusieurs cavités (126) s'étendant le long d'une surface de talon (127) située le plus à l'intérieur en direction radiale de chacune des paires de régions de talons (120) en contact avec une jante de roue (128) lors d'une mise en service à l'état normalement gonflé.

2. Bandage pneumatique selon la revendication 1, **caractérisé en ce que** les cavités (126) sont circulaires dans leur zone de contact avec une portée de talon (132) de la jante de roue (128).

3. Bandage pneumatique selon la revendication 1, dans lequel les cavités (126) forment des espaces vides délimités par la région de talon (120) et par la jante de roue (128) possédant une configuration lenticulaire définie par la surface de talon (127) et par la portée de talon (132).

4. Bandage pneumatique selon la revendication 1, dans lequel les cavités (126) sont disposées de manière équidistante sur la surface de talon (127) autour de la circonférence des régions de talons (220).

5. Bandage pneumatique selon la revendication 1, dans lequel les cavités (126) sont aplaties contre une portée de talon (132) de la jante de roue (128), si bien que l'air que contiennent les espaces vides définis par les cavités (126) et par la portée de talon (132) est essentiellement expulsé des espaces vides lorsque le bandage pneumatique est monté sur la roue.

6. Bandage pneumatique selon la revendication 5, dans lequel les cavités (126) sont entourées d'une matière élastomère qui procure un joint étanche à l'air pour empêcher l'air de réintégrer en retour par fuite les espaces vides définis par les cavités (126) et par la jante de roue (128) lorsque le bandage pneumatique a été monté sur la roue.

7. Bandage pneumatique selon la revendication 1, dans lequel les cavités (126) sont aplaties contre une portée de talon (132) de la jante de roue (128) par des tringles de talons (136) dans des régions de talons (120) lorsque le bandage pneumatique est monté sur une jante de roue (30) et lorsqu'il est mis en service à l'état normalement gonflé.

8. Bandage pneumatique selon la revendication 1, dans lequel les cavités (126) sont aplaties contre une portée de talon (132) de la jante de roue (128) par des tringles de talons (136) dans des régions de talons (120) lorsque le bandage pneumatique est monté sur une jante de roue (30) et lorsqu'il est mis en service à l'état sous-gonflé ou à l'état non gonflé.
